# EUROPEAN PATENT SPECIFICATION

(11) **EP 2 369 705 B1**
(45) Date of publication and mention of the grant of the patent: **01.02.2012**
(21) Application number: 10768789.9
(22) Date of filing: 07.09.2010
(51) Int. Cl.: H02G 3/06, F16L 3/26

(54) **RACK MODULE FOR A SHEET-METAL CABLE TROUGH**
BAHNENMETALL-ABLAGEMODUL ZUR KANALISIERUNG VON KABELN
MODULE DE PLATEAU DESTINÉ À LA CANALISATION DE CÂBLES DE PLAQUE

(30) Priority: 03.02.2010 ES 201030143
(43) Date of publication of application: 28.09.2011
(73) Proprietor: Aiscan, S.L., 03410 Biar (ES)
(72) Inventor: FRANCES PEREZ, Manuel, 03410 Biar (alicante) (ES)
(74) Representative: Arpe Fernandez, Manuel de
(86) International application number: PCT/ES2010/070583
(87) International publication number: WO 2011/095654

(56) References cited:
- DE-U1-202008 009 852
- ES-A1- 2 156 487
- ES-U- 1 053 040

## Description

### FIELD AND PRIOR ART

The present invention relates to a tray module for forming channelling for cables.

Channelling formed from modules based on sheet metal U-shaped profiles are known whose ends are adapted to be connected via tongue and grooving.

Said trays also usually feature a reinforcing rail on the upper part of their lateral walls in a general tube shape dropping towards the inside of the tray.

Through ES 2156487 a joint for cable trays is known. Here, the male end is configured on the upper end of its lateral walls as a flap disposed for sliding on a groove formed underneath the reinforcing rail of the lateral walls of the female end of an adjacently connected tray profile; furthermore, the flaps are configured to tighten on the respective groove with a certain pressure.

But this connection between modules is not strong enough and the use of additional screws and fastening nuts are required which are assembled on respective orifices of two adjacent modules.

ES 1053040 discloses a cable tray with quick joining means, which does not essentially require the use of fastening means such as screws and nuts. The tray is formed by a U-shaped profile at the upper end of its lateral walls, whereon are formed reinforcing rails, where the rails of the female end and the rails of the male end of adjoining trays are configured to couple to each other by sliding and although these rails fit together with a certain pressure, the joining of trays is not very strong so, regarding this, a plurality of orifices for fastening means in the shape of clamps which are inserted into the orifices which are made on the lateral faces of the tray.

### OBJECT OF THE INVENTION

Starting from the state of the art described above, the objective of the proposed invention is the development of a tray module for forming cable channelling which permits the solution of the previously mentioned drawbacks, providing a joint between adjacent modules strong enough so that under no circumstances the use of additional fastening means such as nuts and screws is necessary.

This objective is reached through the characteristics indicated in claim 1. Other additional advantages and objectives are reached through the characteristics indicated in the depending claim.

It starts from a tray module in the shape of an essentially U-shaped cross-section profile delimiting an essentially flat bottom wall and lateral walls which are essentially perpendicular to the bottom wall with a first section wherein the walls have an end in the shape of a generally tube-shaped reinforcing rail and a second section wherein said lateral walls are configured with respective hooking flaps and whose sections have respective ends which are configured to couple via tongue and grooving to an adjacent tray module, and according to the invention, it is characterised in that:
- longitudinal slots which connect with the interior of the reinforcing rails and which are intended for the coupling of the hooking flaps are provided on the lateral walls corresponding to the first section; and
- one of the hooking flaps is configured as a straight flap which extends obliquely towards the interior of the tray module, while the other hooking flap is configured as a bent flap which has a first portion which extends obliquely from the respective lateral wall towards the interior of the tray module and a second portion which extends obliquely towards the outside of the tray module, so that when two adjacent tray modules are joined by tongue and grooving at their respective ends with the hooking flaps housed in the respective longitudinal slots, the straight flap fits inside the respective reinforcing rail, resting against the inner face thereof which is closest to the interior of the tray module, while the bent flap also fits inside the respective reinforcing rail, supported against the inner face thereof which is furthest from the interior of the tray module.

According to an additional characteristic of the invention, it is an advantage for the connection between adjacent tray modules when, on the bottom wall of the tray module, are respectively configured in the area of its ends through notches and projecting pins formed by the cut of the plate which constitutes the bottom wall, so that when two adjacent tray modules are joined by tongue and grooving at their respective ends, the upward folding projecting pins fit into the respective through notches.

### BRIEF DESCRIPTION OF THE DRAWINGS

Other characteristics and advantages of the invention will be clearer from the description which continues to be made with the aid of the attached drawings, referring to a nonlimitative example of embodiment wherein:
Figure 1 shows a perspective top view of a tray module according to the invention.
Figure 2 shows a frontal view of the tray module according to figure 1.
Figure 3 shows a perspective top view of two modules according to figure 1, joined to form a span of a channelling for cables.
Figure 4 is a rear view of the channelling span from figure 3.
Figure 5 shows a tray module according to figure 1 wherein additional fitting means are available.
Figure 6 illustrates a perspective view of the assembly of the two tray modules according to figure 5, forming a channelling span for cables.

### DETAILED DESCRIPTION OF A PREFERRED EMBODIMENT

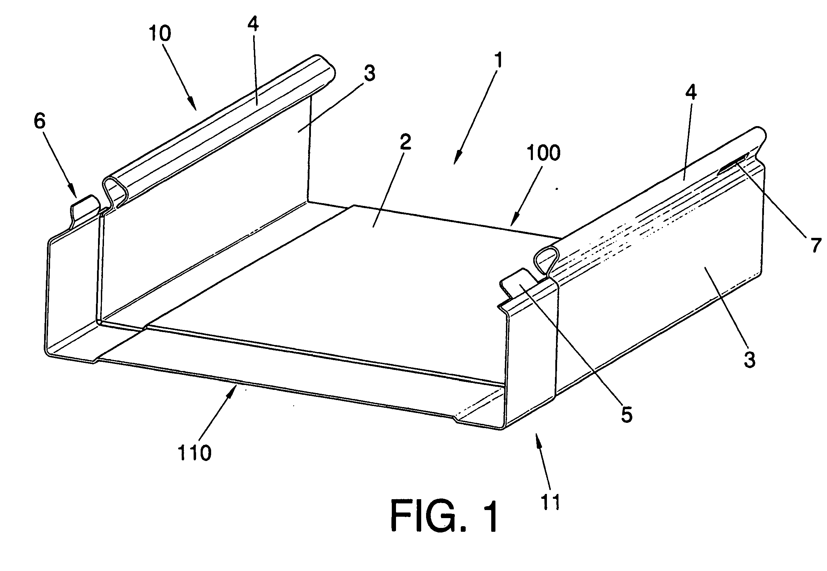

As shown in figure 1, the tray module is provided as an essentially U-shaped cross-section profile 1 which determines an essentially flat bottom wall 2 and lateral walls 3 which are essentially perpendicular to the bottom wall.

This profile 1 is provided with a first section 10 wherein the walls have an end in the shape of a generally tube-shaped reinforcing rail 4 and a second section 11 wherein the lateral walls are configured with respective hooking flaps 5, 6.

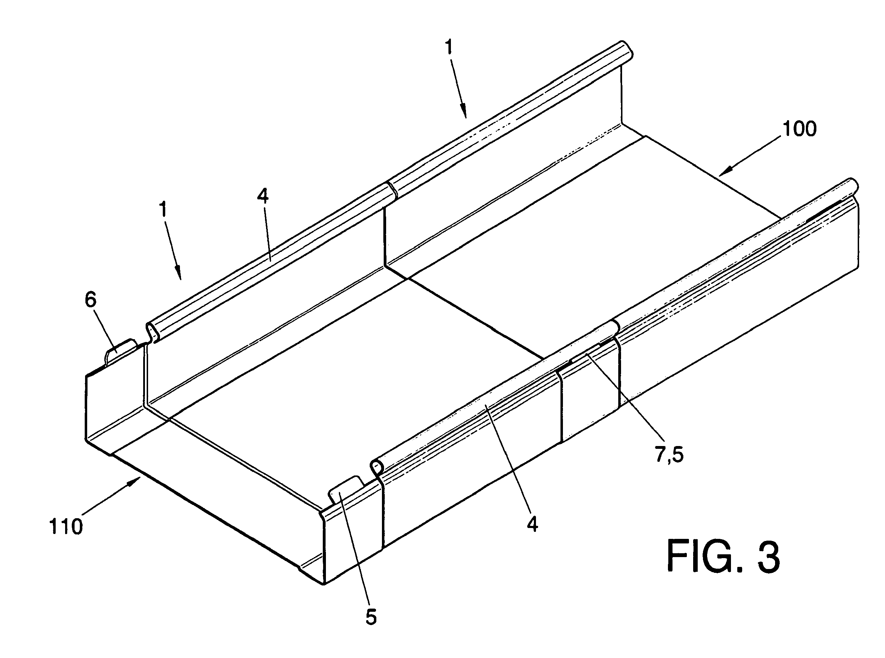

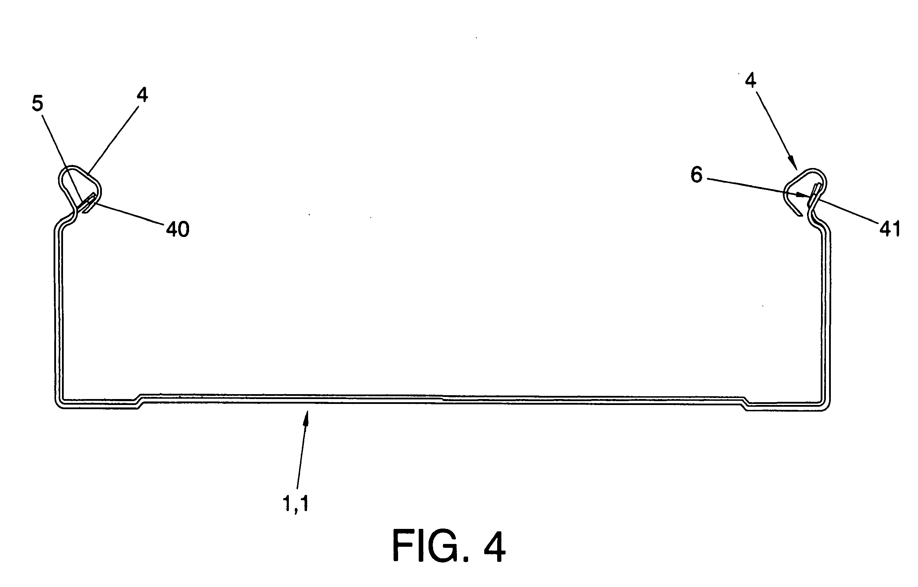

It can be observed that one end 100 of the profile 1 is configured expanded with respect to its opposite end 110, so that two tray modules 1 can be adjacently joined by tongue and grooving of their respective ends 100, 110 as shown in figures 3 and 4 to thus form a channelling span for cables.

As can be observed in figure 1, longitudinal slots 7 which connect with the interior of the reinforcing rails 4 and which, as explained in greater detail below, are intended for the coupling of the hooking flaps 5 and 6 are provided on the lateral walls 3 corresponding to the first section 10.

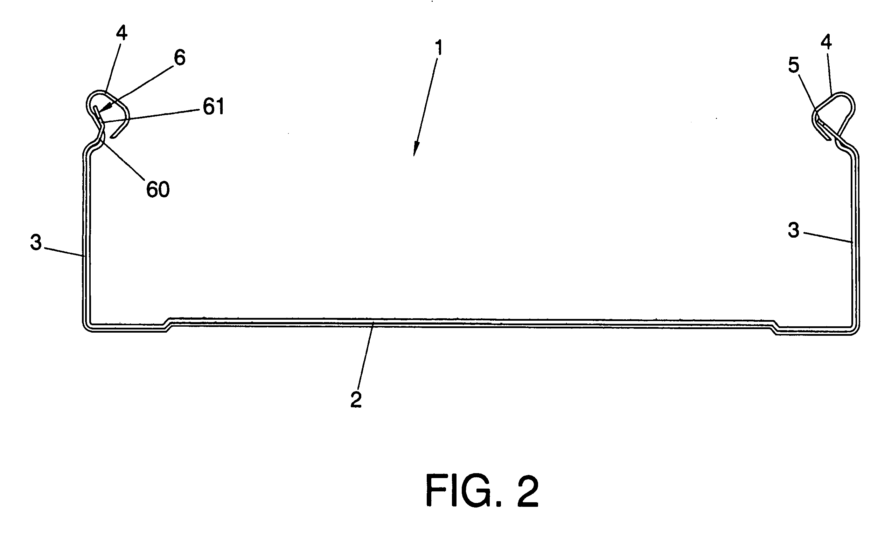

Now making an additional reference to figure 2, it is observed that the hooking flap 5 is configured as a straight flap which extends obliquely towards the interior of the tray module, while the hooking flap 6 is configured as a bent flap 6 which has a first portion 60 which extends obliquely from the respective lateral wall 3 towards the interior of the tray module and a second portion 61 which extends obliquely towards the outside of the tray module. As can be observed in figures 3 and 4, two tray modules 1 are joined by tongue and grooving at their respective ends 100, 110 with the hooking flaps 5, 6 penetrating through the longitudinal slots 7. The straight flap 5 fits inside the respective reinforcing rail 4, resting against the inner face 40 thereof which is closest to the interior of the tray module, while the bent flap 6 also fits inside the respective reinforcing rail 4, supported against the inner face 41 thereof which is furthest from the interior of the tray module.

A connection between tray modules 1 according to that previously described is resistant to tensile force flexure stress between adjacent tray modules and permits the provision of channelling spans suitably resistant for cables.

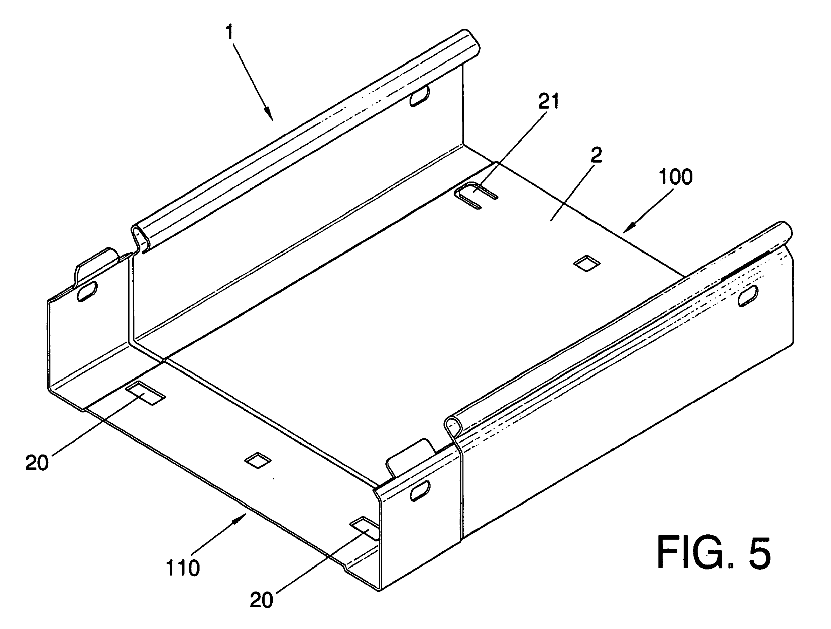

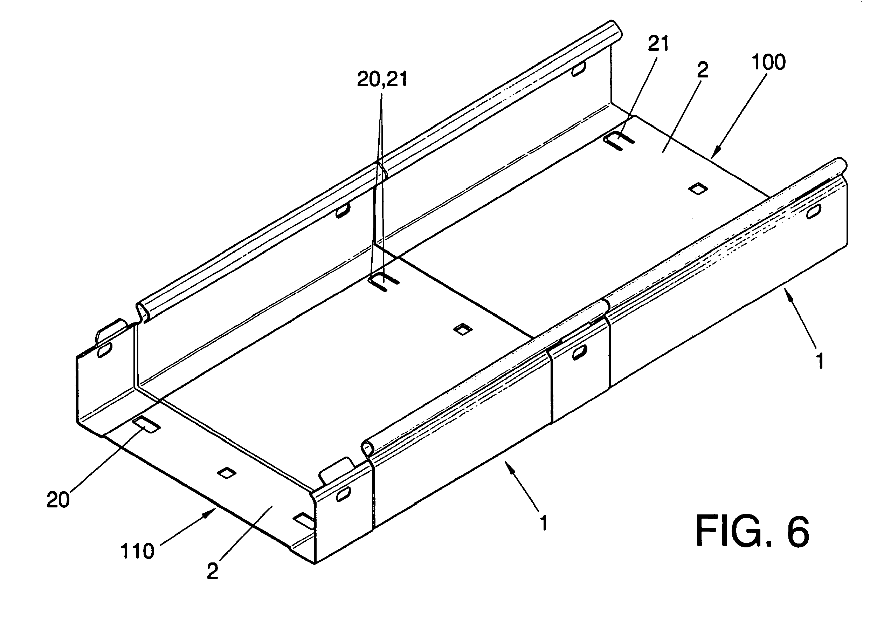

As shown in figure 5, it is possible to configure on the bottom wall 2 of the tray module 1 in the area of its ends 100, 110 through notches 20 and projecting pins 21 formed by the cut of the plate which constitutes the bottom wall 2 and as observed in figure 6, when two adjacent tray modules 1 are joined by tongue and grooving at their respective ends 100, 110, the projecting pins 21 fold upwards to be inserted and fit into the respective through notches 20, providing an additional coupling between tray modules resistant to longitudinal stresses exerted between adjacent modules.

As will be easily understood by persons skilled in the art, that which has been previously described is strictly illustrative of a preferred mode of embodiment of the invention so that technical modifications of all kinds are possible so that the embodiments derived from changes in shape, size and such like, as well as those resulting from an application of that previously revealed, must be considered as included in its scope, so that the invention shall solely by limited by the scope of the following claims.

## Claims

1. Sheet metal tray module for channelling cables in the shape of an essentially U-shaped cross-section profile (1) delimiting an essentially flat bottom wall (2) and lateral walls (3) which are essentially perpendicular to the bottom wall with a first section (10) wherein the walls have an end in the shape of a generally tube-shaped reinforcing rail (4) and a second section (11) wherein said lateral walls are configured with respective hooking flaps (5, 6) and whose sections have respective ends (100, 110) which are configured to couple via tongue and grooving to an adjacent tray module, **characterised in that**:
- longitudinal slots (7) which connect with the interior of the reinforcing rails and which are intended for the coupling of the hooking flaps are provided on the lateral walls (3) corresponding to the first section (10); and
- one of the hooking flaps is configured as a straight flap (5) which extends obliquely towards the interior of the tray module, while the other hooking flap is configured as a bent flap (6) which has a first portion (60) which extends obliquely from the respective lateral wall towards the interior of the tray module and a second portion (61) which extends obliquely towards the outside of the tray module, so that when two adjacent tray modules are joined by tongue and grooving at their respective ends (100, 110) with the hooking flaps (5, 6) housed in the respective longitudinal slots (7), the straight flap (5) fits inside the respective reinforcing rail (4), resting against the inner face thereof which is closest to the interior of the tray module, while the bent flap (6) also fits inside the respective reinforcing rail (4), supported against the inner face thereof which is furthest from the interior of the tray module.

2. Sheet metal tray module for channelling cables according to claim 1, **characterised in that** on the bottom wall (2) of the tray module are respectively configured in the area of its ends (100, 110) through notches (20) and projecting pins (21) formed by the cut of the plate which constitutes the bottom wall (2), so that when two adjacent tray modules (1, 1) are joined by tongue and grooving at their respective ends (100, 110), the projecting pins (21) are folded upwards to fit into the respective through notches (20).

## Patentansprüche

1. Wannenmodul für die Führung von Kabeln, aus Blech mit einem Querschnittprofil (1), das hauptsächlich in Form eines U's geformt ist und eine Bodenfläche (2) abgrenzt, die hauptsächlich flach ist und mit Seitenwänden (3) die im wesentlichen senkrecht zur Bodenfläche angeordnet sind mit einem ersten Abschnitt (10), bei dem die Wände mit einer Verstärkung in Form eines Wulstes (4) abschliessen, und zwar normalerweise in Form eines Rohres, und mit einem zweiten Abschnitt (11), bei dem die Seitenwände mit einem entsprechenden Einrastfalz (5, 6) versehen sind, und deren Abschnitte die entsprechenden Enden aufweisen (100,110), die zwecks Steckkupplung mit einem anliegenden Wannenmodul ausgebildet sind, **dadurch gekennzeichnet dass**:
- an den Seitenwänden (3) des ersten Abschnitts (30) Längsnuten (7) vorgesehen sind, die mit dem Innenraum der Verstärkungswulste in Verbindung stehen und zur Ankupplung der Einrastfalze vorgesehen sind; und
- einer der Einrastfalze als ein gerader Falz (5) ausgebildet ist, der sich schräg hin ins Innere des Wannenmoduls erstreckt, während der andere Einrastfalz als Bogenfalz (6) ausgebildet ist, der einen ersten Teil (60) aufweist, der schräg ab der entsprechenden Seitenwand ins Innere des Wannenmoduls ragt und einen zweiten Teil (61), der sich schräg ausserhalb des Wannenmoduls ausdehnt, so dass, wenn zwei nebeneinanderliegende Wannenmodule mit ihren entsprechenden Enden (100, 110) mit Hilfe der Einrastfalze (5, 6) ineinander gesteckt werden, die in den Längsnuten (7) untergebracht sind, der gerade Falz (5) in dem entsprechenden Verstärkungswulst (4) eingefügt ist, indem er sich auf die Innenseite des Wulstes stützt, der dem Inneren des Wannenmoduls am nächsten liegt, während der Bogenfalz (6) im entsprechenden Verstärkungsvdulst einrastet (4) und sich gegen die Innenseite desselben abstützt, die am weitesten vom Inneren des Wannenmoduls entfernt ist.

2. Wannenmodul aus Blech für die Führung von Kabeln übereinstimmend mit Anspruch 1, **dadurch gekennzeichnet, dass** an der Bodenfläche (2) des Wannenmoduls in beiden Endbereichen (100, 110) einerseits durchgehende Aussparungen (2) ausgebildet sind und andererseits dieselben mit Klemmteilen (21) versehen sind, die durch einen Einschnitt in das Blech der Bodenseite (2) gebildet werden, so dass, wenn zwei aneinanderliegende Wannenmodule (1, 1) mit ihren entsprechenden Enden (100,110) zusammengesteckt werden, die Klemmteile nach oben gebogen werden, um in die entsprechenden durchgehenden Aussparungen (20) einzurasten.

## Revendications

1. Module de plateau pour canalisation de câbles en tôle ayant la forme d'un profil (1) de section transversale essentiellement en forme de U délimitant une paroi de fond (2) essentiellement plate et des parois latérales (3) essentiellement perpendiculaires à la paroi de fond avec un premier tronçon (10) dont les parois terminent en forme de bourrelet de renforcement (4) généralement en forme de tube et un second tronçon (11) dont les parois latérales sont configurées par des rebords d'accrochage respectifs (5, 6) et dont les tronçons ont des extrémités respectives (100, 110) qui sont configurées pour s'accoupler moyennant emboîtement dans un module de plateau adjacent, **caractérisé en ce que** :
- dans les parois latérales (3) correspondant au premier tronçon (30) sont prévues des rainures longitudinales (7) qui communiquent avec l'intérieur des bourrelets de renforcement et qui sont destinées à l'accouplement des rebords d'accrochage ; et
- l'un des rebords d'accrochage est configuré comme un rebord droit (5) qui s'étend obliquement vers l'intérieur du module de plateau, tandis que l'autre rebord d'accrochage est configuré comme un rebord coudé (6) dont une première partie (60) s'étend obliquement depuis la paroi latérale respective jusqu'à l'intérieur du module de plateau et une seconde partie (61) s'étend obliquement vers l'extérieur du module de plateau, de sorte que lorsque deux modules de plateau adjacents s'unissent par emboîtement de leurs extrémités respectives (100, 110) aux rebords d'accrochage (5, 6) logés dans les rainures longitudinales (7), le rebord droit (5) est emboîté dans le bourrelet de renforcement respectif (4) s'appuyant contre la face intérieure de celui-ci la plus proche de l'intérieur du module de plateau, tandis que le rebord coudé (6) est emboîté dans le bourrelet de renforcement respectif s'appuyant contre la face intérieure de celui-ci la plus éloignée de l'intérieur du module de plateau.

2. Module de plateau pour canalisation de câbles en tôle selon la revendication 1, **caractérisé en ce que** la paroi de fond (2) du module de plateau est configurée dans la zone de ses extrémités (100, 110) d'une part par des échancrures passantes (20) et d'autre part par des pattes (21) formées moyennant le découpage de la tôle qui constitue la paroi de fond (2) de sorte que lorsque deux modules de plateau (1, 1) adjacents s'unissent par emboîtement de leurs extrémités respectives (100, 110), les pattes (21) se plient vers le haut pour s'emboîter dans les échancrures passantes respectives (20).
